# FASCICULE DE BREVET EUROPEEN

(11) **EP 4 263 289 B1**
(45) Date de publication et mention de la délivrance du brevet: **05.02.2025**
(21) Numéro de dépôt: 21836026.1
(22) Date de dépôt: 06.12.2021
(51) Int. Cl.: B60Q 1/26, F21S 41/20, F21S 43/239, F21S 43/245, F21S 43/249, B60Q 1/00, F21S 41/50

(54) **PROJECTEUR POUR VEHICULE AVEC UNE FONCTION D'ECLAIRAGE SITUEE DERRIERE UNE FONCTION DE SIGNALISATION**
SCHEINWERFER FÜR FAHRZEUGE MIT EINER BELEUCHTUNGSFUNKTION HINTER EINER SIGNALFUNKTION
VEHICLE HEADLAMP WITH A LIGHTING FUNCTION BEHIND A SIGNALLING FUNCTION

(30) Priorité: 18.12.2020 FR 2013637
(43) Date de publication de la demande: 25.10.2023
(73) Titulaire: Renault s.a.s, 92100 Boulogne Billancourt (FR)
(72) Inventeur: CALAIS, Valère, 78084 guyancourt cedex (FR)
(86) Numéro de dépôt international: PCT/EP2021/084396
(87) Numéro de publication internationale: WO 2022/128571

(56) Documents cités:
- EP-A1- 1 835 224
- EP-B1- 2 159 477
- DE-A1- 10 207 694
- JP-A- 2012 038 424
- JP-A- 2012 064 535

## Description

L'invention a pour objet un projecteur pour véhicule dont une fonction d'éclairage est située derrière une fonction de signalisation.

Certains projecteurs de véhicule automobile assurent une fonction d'éclairage (feux de croisement et/ou de route) et une fonction de signalisation (feux de position, clignotant) dans laquelle la fonction d'éclairage est disposée derrière la fonction de signalisation. Afin d'assurer un bon fonctionnement de la fonction d'éclairage, un dispositif mobile est prévu pour déplacer la fonction de signalisation lorsque la fonction d'éclairage est activée de manière à libérer l'espace devant la fonction d'éclairage. Cette solution est toutefois relativement complexe à mettre en œuvre et sujette à des pannes.

On connait aussi du document EP1434000 un dispositif d'éclairage comportant un écran transparent situé entre la glace extérieure et une source de lumière principale, cet écran présentant une face munie de foyers de diffusion de la lumière. Cet agencement permet d'éclairer toute la surface de la glace ou de créer des zones éclairées continues et localisées sur la glace. Cet écran peut aussi assurer une fonction de feu de position lorsqu'il est éclairé par ses bords par des sources de lumière secondaires. L'écran s'étendant parallèlement à la glace extérieure, voire épousant celle-ci, un observateur situé devant le dispositif d'éclairage peut toutefois apercevoir la source lumineuse principale. En outre, la perception des fonctions d'éclairage peuvent être perturbées par l'écran ou par les rayonnements lumineux provenant de l'extérieur du dispositif d'éclairage. EP2159477 montre également un projecteur automobile réalisant une fonction d'éclairage et une fonction de signalisation.

L'invention vise à remédier à tout ou partie de ces inconvénients en proposant un projecteur pour véhicule selon la revendication 1.

La position d'utilisation d'un projecteur dépendra du véhicule utilisé et de la réglementation en vigueur. Pour un véhicule automobile, la position d'utilisation correspond généralement à une position dans laquelle l'axe optique est horizontal ou sensiblement horizontal.

Par cet agencement particulier de ses différents éléments, le projecteur selon l'invention permet de réaliser une fonction de signalisation devant une fonction d'éclairage qui n'est pas perturbée par les faisceaux lumineux provenant de l'extérieur du projecteur et qui n'est pas visible depuis l'extérieur du projecteur par un observateur. Notamment, la fonction de signalisation peut être assurée par le ou les faisceaux lumineux émis par l'au moins une source lumineuse éclairant l'écran dans son épaisseur et par la face interne de l'écran qui réfléchit ce(s) faisceau(s) lumineux vers la glace et l'extérieur du projecteur. L'écran étant transparent, une majeure partie (au moins 75%, voire au moins 80%) du (des) faisceau(s) lumineux émis par le ou les modules d'éclairage peut le traverser lorsque la fonction d'éclairage est active. En outre, dans la mesure où l'écran réfléchit une partie du(des) faisceau(s) lumineux au-dessus du ou des modules d'éclairage, la fonction d'éclairage est peu perturbée par l'écran. Avantageusement, l'écran peut présenter une face interne et une face externe opposée parallèles. En particulier, les modules optiques peuvent être conformés de manière à réfléchir la lumière émise par l'au moins une source perpendiculairement à la face externe.

Avantageusement, lorsque le projecteur comprend au moins deux modules d'éclairage, le deuxième angle peut être tel que, pour le module d'éclairage émettant le cône de lumière le plus grand, la partie du cône de lumière du faisceau lumineux de ce module située sous l'axe optique dans la position d'utilisation du projecteur, notamment la partie du cône de lumière la plus éloignée de l'axe optique, est réfléchie par l'écran en direction dudit module d'éclairage, au-dessus de celui-ci. Ceci permet de réduire davantage les perturbations de la fonction d'éclairage par l'écran.

Avantageusement, le projecteur peut comprendre, à l'intérieur du boîtier, un élément absorbeur de lumière disposé dans une partie du boîtier située au-dessus de l'axe optique dans la position d'utilisation du projecteur, notamment au-dessus du cône de lumière, cet élément absorbeur s'étendant sur une surface suffisante pour recevoir la partie du cône de lumière du faisceau lumineux émise par ledit au moins un module d'éclairage et réfléchie par l'écran. Autrement dit, la surface de l'absorbeur est au moins égale à une surface d'intersection de l'élément absorbeur avec la partie du cône de lumière émise par ledit au moins un module d'éclairage et réfléchie par l'écran. Ceci permet de réduire davantage les perturbations de la fonction d'éclairage par l'écran. Notamment, cet élément absorbeur de lumière peut faire partie du boîtier ou être fixé à l'intérieur du boîtier. Il peut s'agir d'une surface de couleur sombre, de préférence la plus foncée possible, voire noire, à l'aspect mat, présentant éventuellement des aspérités supprimant ou réduisant la réflexion spéculaire.

Avantageusement, au moins une partie supérieure d'un contour d'une zone transparente de la glace, notamment une partie située au-dessus de l'axe optique dans la position d'utilisation du projecteur, est définie par une courbe d'intersection de la glace avec le cône de lumière dudit au moins un module d'éclairage, notamment avec le cône de lumière le plus grand lorsqu'au moins deux modules d'éclairage sont présents ou par une courbe située à l'extérieur de la courbe d'intersection à une distance déterminée de celle-ci. Ceci permet de limiter le contour d'une zone transparente de celle-ci, autrement dit de limiter la surface de la glace, améliorant le rendu esthétique des fonctions d'éclairage et réduisant les reflets extérieurs. Cette zone transparente peut présenter une partie de la surface de la glace ou la totalité de celle-ci.

Le plus souvent, le projecteur pourra comprendre deux ou plus modules d'éclairage. Dans ce cas, on pourra avantageusement les disposer l'un à côté de l'autre horizontalement, le projecteur étant dans la position d'utilisation, ce qui permet de simplifier la réalisation du projecteur notamment par rapport à une position l'un au-dessus de l'autre des modules d'éclairage qui peut nécessiter l'ajout de cloisons horizontales entre les modules afin de les isoler.

Dans certains cas, l'au moins un module d'éclairage peut émettre un cône de lumière présentant un rétrécissement. Le cône de lumière peut alors présenter, depuis le module d'éclairage, une première partie convergente jusqu'au rétrécissement suivie d'une deuxième partie divergente. Dans ce cas, la glace peut avantageusement être disposée au niveau du rétrécissement du cône de lumière le long de l'axe optique. Ceci permet de réaliser une zone transparente la plus réduite possible et par conséquent d'avoir moins de rayons de lumière extérieure qui entrent à l'intérieur du projecteur, et aussi d'obtenir un aspect plus compact en hauteur.

Les modules optiques sur l'écran peuvent diffuser une portion des faisceaux lumineux reçus par l'écran et perturber la fonction d'éclairage résultant de l'activation du module d'éclairage. Cette diffusion sera d'autant plus importante que l'éclairement d'un module d'éclairage sera élevé et que la densité surfacique des modules optiques sera grande. Afin de réduire cette diffusion, l'écran peut présenter au moins une première zone éclairée recevant dudit au moins un module d'éclairage une première intensité lumineuse et au moins une deuxième zone éclairée recevant dudit au moins un module d'éclairage une deuxième intensité lumineuse inférieure à la première intensité lumineuse. On pourra alors choisir une densité surfacique des modules optiques dans ladite au moins une première zone éclairée inférieure à la densité surfacique desdits modules optiques dans ladite au moins une deuxième zone éclairée.

Avantageusement, on peut disposer au moins une source lumineuse sur au moins un bord de l'écran émettant un faisceau lumineux à l'intérieur de l'écran et/ou au moins un guide de lumière s'étendant le long d'au moins un bord de l'écran, l'au moins une source lumineuse étant disposée à une extrémité du guide de lumière et émettant un faisceau lumineux à l'intérieur du guide de lumière.

L'écran peut enfin être utilisé pour définir différentes zones lumineuses et créer ainsi des animations et/ou formes lumineuses. A cet effet, l'écran peut recevoir au moins deux faisceaux lumineux d'au moins deux sources de lumière distinctes, notamment commandées séparément, et l'écran peut être divisé en au moins deux zones recevant chacune l'un des faisceaux lumineux, chaque zone étant séparée d'une autre zone par un matériau opaque bloquant les faisceaux lumineux.

Avantageusement, la glace peut être en un matériau transparent teinté. L'invention est maintenant décrite en référence aux dessins annexés, non limitatifs, dans lesquels :
[Fig. 1] La figure 1 représente schématiquement en coupe un projecteur selon un mode de réalisation.
[Fig. 2] La figure 2 représente une vue schématique en perspective du module d'éclairage, d'un écran et d'une glace d'un projecteur selon un mode de réalisation.
[Fig. 3] La figure 3 représente une vue schématique de profil d'un écran du projecteur selon un mode de réalisation.
[Fig. 4] La figure 4 représente partiellement une vue de face des modules optiques situés à la surface de l'écran selon un exemple de réalisation, ici avec des modules optiques de type conique.
[Fig. 5] La figure 5 représente schématiquement un module d'éclairage, son cône de lumière et le positionnement de l'écran, de la glace et d'un élément absorbant selon un mode de réalisation.
[Fig. 6] La figure 6 représente schématiquement l'inclinaison d'une glace en fonction d'un projecteur extérieur.
[Fig. 7] La figure 7 est une représentation schématique de face d'un écran selon un mode de réalisation de l'invention.

Dans la présente description, les termes avant, arrière, supérieur, inférieur, au dessus, en dessous font référence aux directions du véhicule, le projecteur étant monté sur le véhicule (dans une position d'utilisation). Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend une direction/un plan formant un angle d'au plus ±20°, voire d'au plus ±10° ou d'au plus ±5°, avec une direction/un plan horizontal, longitudinal ou vertical.

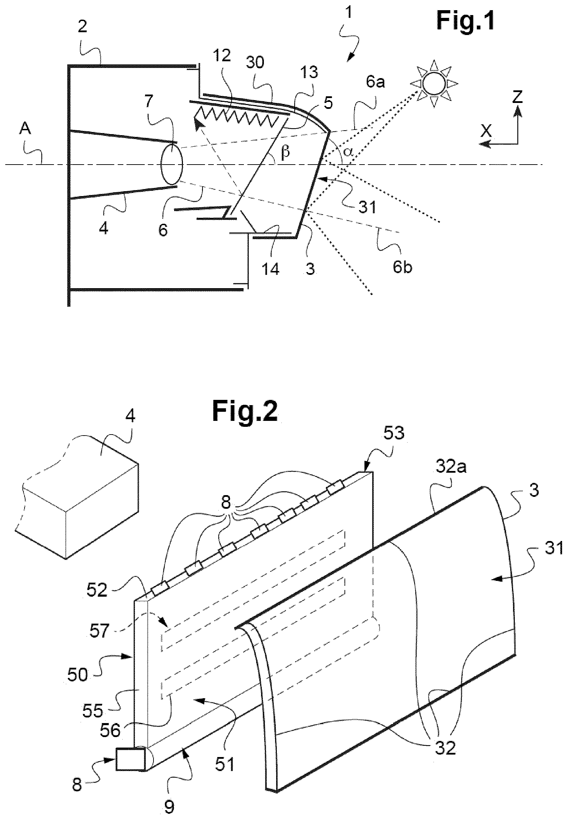

La figure 1 représente un projecteur 1 comprenant un boîtier 2 fermé par une glace transparente 3. La glace 3 est en matériau plastique transparent (par exemple en poly méthacrylate de méthyle (PMMA) ou en polycarbonate) et peut être teintée afin de rendre moins visible l'intérieur du projecteur. Cette teinte peut augmenter l'absorption du matériau utilisé pour réaliser la glace d'au plus 20% par rapport au même matériau sans teinte. Le boîtier 2 contient en son intérieur au moins un module d'éclairage 4 et un écran transparent 5.

Sur les figures, un seul module d'éclairage 4 est représenté, mais on pourra avantageusement prévoir deux ou plus modules d'éclairage, par exemple un module d'éclairage assurant une fonction d'éclairage de type feu de route et un module d'éclairage assurant une fonction d'éclairage de type feu de croisement. Dans ce cas, il est préférable de disposer les modules d'éclairage les uns à côté des autres, horizontalement. Les axes optiques de chaque module d'éclairage présentent typiquement un écart angulaire de 0 à 5° verticalement et de 0 à 20° horizontalement.

On pourra utiliser tout type de module d'éclairage, notamment à lampe (à filament ou à décharge) ou utilisant des diodes électroluminescentes (LEDs) ou LASER, avec ou sans guide de lumière. Toutefois des modules utilisant des LEDs sont préférés. Ces sources lumineuses sont utilisées avec un système optique de type réflecteur ou de type projection, avec ou sans lentille, Ces différents types de modules sont bien connus et ne seront pas décrits plus en détail.

Le module d'éclairage 4 émet un faisceau lumineux dans la direction d'un axe optique A définissant un cône de lumière 6. Le cône de lumière correspond au faisceau des rayons lumineux divergents sortant du module d'éclairage 4. Il peut notamment s'agir d'une surface définie par les rayons lumineux utiles les plus écartés de l'axe optique. Ces rayons lumineux utiles peuvent être définis comme les rayons lumineux pour lesquels la valeur de l'éclairement est égale à une valeur déterminée du maximum de l'éclairement des rayons lumineux du module. Cette valeur peut être imposée par la règlementation, elle peut être comprise habituellement entre 0 et 1250 Cd. Dans la pratique, ce cône est formé d'une succession de courbes s'étendant dans des plans orthogonaux à l'axe optique, chaque courbe étant définie par l'intersection des rayons lumineux utiles les plus éloignés de l'axe optique avec un plan orthogonal à l'axe optique. Par convention, on prendra comme courbe d'origine l'image de la pupille 7 du module d'éclairage, projeté si besoin sur la dernière surface optique du module d'éclairage. Cette pupille 7 est donc souvent le réflecteur ou une lentille de sortie d'un module d'éclairage.

Sur la figure 1, le projecteur 1 est représenté dans sa position d'utilisation montée sur le véhicule, l'axe optique A s'étendant horizontalement ou sensiblement horizontalement.

La forme du cône de lumière 6 est en général imposée par la règlementation, de même que la photométrie requise pour chaque type de fonction (feu de route de croisement,...) et chaque module d'éclairage sera choisi en conséquence. Par exemple, les cas suivants peuvent se présenter :
- module d'éclairage réalisant uniquement une fonction feu de croisement, dans un plan vertical contenant l'axe optique, le cône de lumière forme un angle de +2° à -10° par rapport à l'axe optique, sans tenir compte des marges de réglage (les angles positifs correspondant aux parties du cône au dessus de l'axe optique, les angles négatifs aux parties du cône en dessous de l'axe optique),
- module d'éclairage réalisant uniquement une fonction feu de route, dans un plan vertical contenant l'axe optique, le cône de lumière forme un angle de +10° à -3° par rapport à l'axe optique, sans tenir compte des marges de réglage,
- module d'éclairage réalisant à la fois les fonctions feu de route et feu de croisement, dans un plan vertical contenant l'axe optique, le cône de lumière forme un angle de +10° à -10° par rapport à l'axe optique, sans tenir compte des marges de réglage.

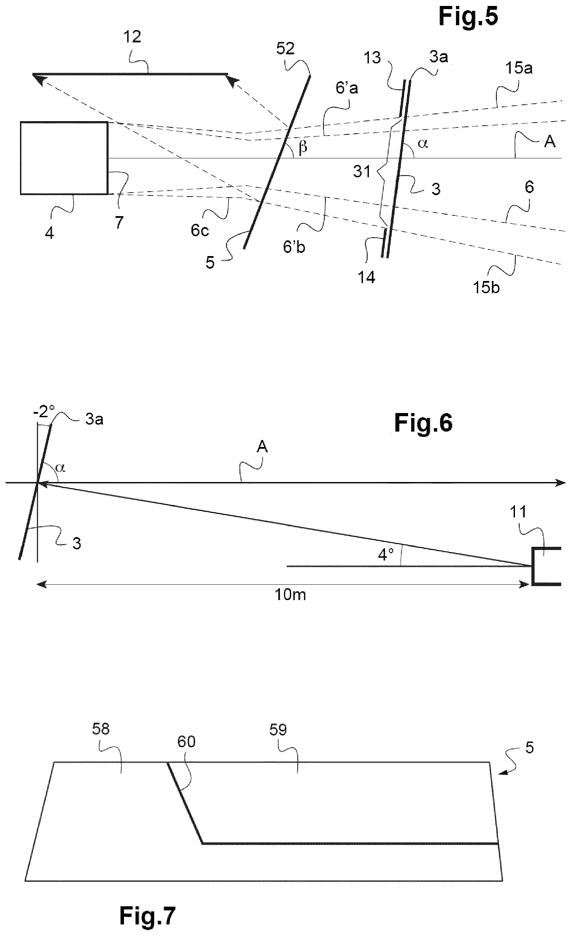

En outre, le cône de lumière 6 peut présenter une forme simple conique, dont les limites supérieure et inférieure sont désignées par les références 6a et 6b respectivement, tel que représenté figure 1, ou une forme complexe présentant depuis le module d'éclairage, une forme convergente jusqu'à un rétrécissement 6c suivie d'une forme divergente, ce cône présentant des limites supérieure et inférieure désignées par les références 6'a et 6'b respectivement sur la figure 5. Dans l'exemple représenté, l'écran 5 est en matière plastique transparente, par exemple en PMMA ou en polycarbonate. Son épaisseur peut être de 2 à 5 mm, notamment afin de faciliter sa fabrication par moulage par injection. Sa couleur peut être incolore.

L'écran 5 présente deux faces opposées principales 50, 51, à savoir de plus grandes dimensions que les autres faces, de préférence parallèles, dont l'une 50 est une face interne située en regard du module d'éclairage 4 et l'autre 51 est une face externe située du côté de la glace 3. L'écran 5 présente en outre des bords (ou chants) 52-55 dont au moins un reçoit un faisceau lumineux émis par une ou plusieurs sources lumineuses 8 éclairant l'écran dans son épaisseur. De manière générale la ou les sources lumineuses 8 sont de type LED avec ou sans collimateur.

Sur la figure 2, deux bords opposés 52, 54 de l'écran sont ainsi éclairés, le bord supérieur 52 étant éclairé par une série de sources lumineuses 8 et le bord inférieur 54 est éclairé par une unique source lumineuse située à une extrémité d'un guide de lumière 9 s'étendant le long du bord inférieur 54. Ce guide de lumière 9 est ici un guide cylindrique. L'invention n'est toutefois pas limitée à une forme particulière de guide 9 pourvu qu'il permette de diffuser la lumière dans l'épaisseur de l'écran. Un tel guide de lumière est donc également formé d'une matière plastique transparente, par exemple celles mentionnées plus haut.

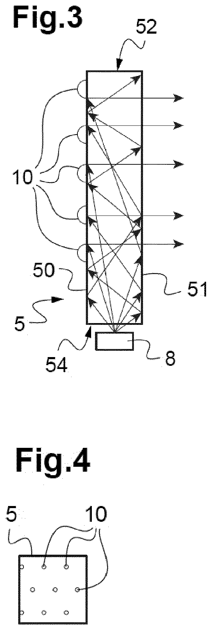

Afin de réaliser une fonction de signalisation, la face interne de l'écran 5 est munie d'une pluralité de modules optiques 10 diffusant la lumière émise par les sources lumineuses 8 en direction de la glace, cette lumière sortant par la face externe 51. Les modules optiques 10, aussi appelés micro-optiques, sont des altérations superficielles de la face interne de l'écran, de type bossage ou creux, modifiant localement le relief de cette face. Ces modules optiques peuvent être formés par traitement de surface (traitement laser ou traitement d'abrasion mécanique) ou plus fréquemment lors de la réalisation de l'écran par moulage. Ces modules optiques 10 ont pour fonction première d'extraire la lumière émise par la ou les sources de lumière 8 hors de l'écran par la face externe 51, par réflexion vers l'extérieur de l'écran des rayons lumineux susceptibles de se propager dans l'épaisseur de l'écran et émis par la ou les sources de lumière 8. L'écran 5 joue ainsi le rôle de guide optique surfacique, aussi appelé rideau de lumière ou « light curtain » en anglais, les rayons lumineux entrant par ses chants dans son épaisseur, s'y propageant par une succession de réflexions internes totales et en sortant par la face externe, opposée à la face pourvue de modules optiques. Quand une partie au moins de ces rayons lumineux frappent les modules optiques 10, les rayons sont réfléchis, au moins en partie, suivant une direction transverse à la face externe, de préférence perpendiculaire. Pour l'observateur, tout va alors se passer comme si ces modules optiques étaient eux même des sources lumineuses. De préférence, chacun des modules optiques 10 est configuré de manière à réfléchir la lumière perpendiculairement à la face externe, favorisant ainsi la sortie du rayon lumineux, tel que représenté figure 3.

La glace 3 du projecteur forme un angle alpha (α) de 60 à 90°, voire de 70° à 90°, avec l'axe optique du module d'éclairage 4 en position d'utilisation du projecteur, tel que représenté schématiquement sur les figures 1, 5 et 7. Autrement dit, la glace peut être verticale ou être inclinée, son bord supérieur 3a, plus précisément le bord supérieur 32a de sa zone transparente 31, étant dirigé vers le sol, d'un côté opposé au module d'éclairage. Une position verticale à inclinée permet de diriger les rayonnements du soleil ou d'autres éclairages majoritairement vers le sol, tel que représenté schématiquement figure 1, une inclinaison de 60 à 89°, voire de 60 à 88°, permet de favoriser la réflexion des éclairages externes vers le sol. Toutefois, il est possible que la glace 3 forme un angle alpha de 90° à 100° avec l'axe optique du module (son bord supérieur est alors dirigé vers le sol mais du côté du module d'éclairage), ce qui permettrait toujours de diriger les rayonnements du soleil ou d'autres éclairages majoritairement vers le sol, notamment si leur angle par rapport à l'axe optique du module d'éclairage est supérieur à 20°.

Cet angle d'inclinaison pourra être déterminé en fonction des types d'éclairage externe que l'on veut réfléchir en direction du sol. Par exemple, si l'on considère un véhicule arrivant en face avec un projecteur 11 monté légèrement plus bas que le projecteur de l'invention (1,1m vs 0,4m, autrement dit l'axe optique du projecteur 11 étant situé 70 cm sous l'axe optique A), tel que représenté figure 6, à 10m de distance et dont les rayons ont un angle montant de 4°, on choisira un angle α de 88° afin que les rayons soient réfléchis parallèlement à l'axe optique A ou vers le sol.

Par ailleurs, l'écran 5 forme un angle beta (β) avec l'axe optique tel que, dans la position d'utilisation du projecteur, une partie 6b, 6'b du cône d'émission du faisceau lumineux située sous l'axe optique est réfléchie par l'écran 5 en direction dudit module d'éclairage, au-dessus de celui-ci, tel que représenté schématiquement figures 1 et 5. Le bord supérieur 52 de l'écran est ainsi incliné en direction de l'axe optique. Selon l'invention, cette inclinaison est telle qu'un rayon lumineux se propageant le long de la limite inférieure 6b, 6'b du cône de lumière, à savoir le long d'une partie du cône d'émission la plus éloignée de l'axe optique, est réfléchi par l'écran au-dessus du module d'éclairage 4. Cette inclinaison de l'écran permet aussi de limiter ou d'empêcher que des rayons lumineux externes, provenant de la glace, traversent l'écran et atteignent le module optique 4. Si plusieurs modules d'éclairage 4 sont prévus, l'angle β est alors déterminé de sorte que, pour le module d'éclairage émettant le cône de lumière le plus grand, la partie du cône d'émission du faisceau lumineux située sous l'axe optique dans la position d'utilisation du projecteur soit réfléchie par l'écran en direction dudit module d'éclairage, au-dessus de celui-ci.

En outre, on pourra disposer un élément absorbeur de lumière 12 dans une partie supérieure du boîtier 2 tel que représenté sur les figures 1 et 5, et dimensionner cet élément absorbeur de sorte qu'il s'étende sur une surface suffisante pour recevoir la portion de faisceau lumineux émise par le module d'éclairage et réfléchie par l'écran. Ainsi, lorsque le module d'éclairage 4 fonctionne, l'écran dirige les reflets de ce module vers l'élément absorbeur 12, ce qui maintient un effet sombre à l'intérieur du projecteur et évite que la lumière émise retourne dans le module d'éclairage par réflexion spéculaire. En outre, cet élément absorbeur 12 étant situé sous une partie supérieure du boîtier, il reste invisible pour un observateur extérieur (piéton). La surface de l'élément absorbeur 12 recevant les rayons lumineux du module d'éclairage réfléchis par l'écran peut être une surface de couleur sombre, de préférence la plus foncée possible, voire noire, à l'aspect mat, présentant éventuellement des aspérités supprimant ou réduisant la réflexion spéculaire. Ces aspérités peuvent être réalisées par un grainage ou former un bafflage ou une série de creux d'angle à la pointe supérieur à 45°. Si sa surface est susceptible de réfléchir une partie du faisceau lumineux reçue, l'élément absorbeur 12 pourra être agencé de manière à diriger les rayons réfléchis vers une zone du projecteur non visible par un observateur extérieur. L'élément absorbeur 12 peut être réalisé d'une pièce avec le boîtier ou faire partie d'une partie d'habillage interne du boîtier, fixée à ce dernier.

Dans l'exemple représenté figure 1, la glace 3 présente une partie 30 s'étendant en partie au-dessus de l'élément absorbeur 12 : on pourra prévoir de rendre opaque une face intérieure de cette partie 30 afin d'éviter la pénétration des rayons lumineux externes à l'intérieur du boîtier, notamment en dehors d'une zone transparente 31 de la surface de la glace, cette zone transparente étant dédiée aux fonctions d'éclairage/signalisation. Notamment, la face intérieure de cette partie 30 peut être rendue opaque par une pièce d'habillage 13 de couleur sombre, voire noire, de préférence mate. En particulier, cette zone transparente 31 pourra être délimitée par un contour 32 défini soit par une courbe d'intersection de la glace avec le cône de lumière du module d'éclairage, notamment avec le cône de lumière le plus grand lorsque deux ou plus modules d'éclairage sont présents soit par une courbe située à l'extérieur de la courbe d'intersection à une distance déterminée de celle-ci. Cette dernière solution sera préférée car elle permet de prévoir une marge correspondant aux marges de réglage du module d'éclairage, la distance séparant le contour de la courbe d'intersection correspondant à cette marge. Sur la figure 5, on peut voir les limites supérieure 15a et inférieure 15b d'un cône correspondant au cône de lumière 6 auquel sont ajoutées les marges de réglage du module d'éclairage. Ceci permet de limiter les dimensions de la zone transparente 31 et ainsi de réduire les risques de pénétration de rayons externes à l'intérieur du boîtier par cette zone transparente. En outre, ces rayons extérieurs venant le plus souvent d'au-dessus du projecteur (soleil, éclairage public), on pourra se contenter de délimiter une partie supérieure de la zone transparente 31 située au-dessus de l'axe optique par le contour 32 tel que précédemment décrit. On pourra notamment choisir un module d'éclairage présentant un cône de lumière dont la hauteur (mesurée verticalement dans la position d'utilisation) est la plus faible possible (par exemple inférieure à 130mm voire inférieure à 50mm), par exemple en choisissant un module d'éclairage comportant une pupille la plus petite possible, ceci afin de réduire au maximum la surface de la zone transparente 31 de la glace, au moins en partie supérieure, et par conséquent les reflets dus aux éclairages externes.

Dans l'exemple de la figure 1, la zone transparente 31 de la glace ne représente qu'une partie de la surface de la glace 3, le reste de la surface étant rendu opaque par un ou plusieurs habillages 13, 14. On pourrait toutefois envisager que la surface de la glace soit égale à la surface de la zone transparente.

Dans l'exemple représenté figure 5, le module d'éclairage 4 émet un cône de lumière 6 présentant un rétrécissement, tel que décrit plus haut. On pourra alors positionner la glace tel que représenté figure 5. Toutefois, on placera de préférence la glace 3 au niveau du rétrécissement du cône de lumière le long de l'axe optique (dans la direction d'émission de la lumière) afin d'avoir l'entrée de lumière la plus petite possible pour augmenter l'effet sombre interne et dans le but de donner un aspect plus compact verticalement.

On pourra avantageusement sélectionner un module d'éclairage 4 dont le rétrécissement 6c est le plus distant possible du module d'éclairage afin de permettre de loger l'écran à l'intérieur du boîtier sans augmenter de façon notable la dimension du boîtier selon la direction de l'axe optique et d'augmenter l'aspect sombre et donc de réduire la visibilité du module d'éclairage par un observateur. Lors du fonctionnement du module d'éclairage 4, les modules optiques de l'écran peuvent modifier le faisceau lumineux. En particulier, une densité surfacique importante de modules optiques dans une zone de forte intensité lumineuse peut augmenter l'éblouissement d'un observateur extérieur par diffusion. Afin de limiter ces modifications, on pourra répartir différemment les modules optiques 10 à la surface de l'écran en fonction des intensités lumineuses émises par le module d'éclairage et reçues par l'écran. On pourra ainsi définir une première zone éclairée 56 de l'écran recevant du module d'éclairage une première intensité lumineuse et une deuxième zone éclairée 57 recevant du module d'éclairage une deuxième intensité lumineuse inférieure à la première intensité lumineuse. On pourra alors choisir une densité surfacique des modules optiques dans la première zone éclairée inférieure à la densité surfacique desdits modules optiques la deuxième zone éclairée. Typiquement, dans cette première zone, les modules optiques peuvent recouvrir de 0 à 20% de la surface de la première zone pour un espacement entre modules optiques de 0,15mm ou peuvent recouvrir de 0 à 35% de la surface de la première zone pour un espacement des modules optiques de 0,5mm. En ce qui concerne la deuxième zone, celle-ci peut être dépourvue de modules optiques ou les modules optiques peuvent recouvrir une proportion de la surface de la deuxième zone inférieure aux pourcentages précités pour la première zone. Toutefois, quand des modules optiques sont présents dans cette deuxième zone, en particulier pour dessiner un motif éclairé par la ou les sources lumineuses de l'écran ou pour réaliser une fonction de signalisation, les modules optiques peuvent recouvrir une proportion de la surface de la deuxième zone supérieure aux pourcentages précités pour la première zone, voire la quasi-totalité de la surface de la deuxième zone. Les densités surfaciques des différentes zones pourront être choisies en fonction du rendu lumineux souhaité. Typiquement, selon les zones de l'écran, pour un espacement entre modules optiques de 0,1mm à 1mm, les modules optiques peuvent ainsi recouvrir de 0 à 99% de la surface de la zone d'écran considérée. La forme et les dimensions de ces première et deuxième zones 56, 57 représentées schématiquement figure 2 seront de préférence déterminées en tenant compte des marges de réglage du module d'éclairage. La répartition des modules optiques 10 sur la face interne 50 de l'écran sera de préférence régulière quelque soit la zone, tel que représenté schématiquement figure 4, avec une densité surfacique différente d'une zone à l'autre. A titre d'exemple, dans une zone recevant une lumière intense, par exemple recevant plus de 10000 Candelas, les modules optiques 10 peuvent recouvrir 35% ou moins, voire 20% ou moins de la surface de la zone, dans une zone recevant une lumière faible, par exemple recevant moins de 10000 candelas, les modules optiques 10 peuvent recouvrir de 0% à 99% de la surface de la zone.

Bien entendu, l'invention n'est pas limitée par la forme et le nombre de première et deuxième zones d'écran.

On pourra en outre prévoir de diviser l'écran 5 en zones 58, 59 séparées par un matériau opaque 60, ici sous forme de bande, bloquant les faisceaux lumineux, tel que représenté sur figure 7. En utilisant des sources de lumière distinctes pour éclairer chacune de ces zones de l'écran, on pourra créer des formes lumineuses différentes. En outre, une commande distincte des sources de lumière permettra d'éclairer chaque zone 58, 59 de manière indépendante, par exemple pour réaliser des fonctions de signalisation différentes (clignotant /toute autre fonction de signalisation réglementaire, ou position/clignotant). On disposera de préférence ce matériau opaque en dehors d'une zone de l'écran recevant une forte intensité lumineuse du module d'éclairage. Ces deux zones 58, 59 peuvent être obtenues en réalisant l'écran en deux parties assemblées et en appliquant une couche de matériau opaque entre les deux parties assemblées, ou lors de la réalisation de l'écran par injection en prévoyant une étape d'injection du matériau opaque entre les deux zones.

Le projecteur selon l'invention peut être un projecteur avant d'un véhicule automobile ou de tout autre véhicule équipé de projecteur.

## Revendications

1. Projecteur (1) pour véhicule comprenant un boîtier (2) fermé par une glace (3) transparente, à l'intérieur duquel sont disposés au moins un module d'éclairage (4) émettant un faisceau lumineux dans la direction d'un axe optique définissant un cône de lumière (6) et un écran (5) transparent positionné entre ledit au moins un module d'éclairage et la glace, au moins un bord (52-55) de l'écran recevant un faisceau lumineux émis par au moins une source lumineuse (8), distincte du module d'éclairage (4), et guidé à l'intérieur de l'écran,
- une face interne (50) de l'écran située en regard dudit au moins un module d'éclairage étant munie d'une pluralité de modules optiques (10) diffusant la lumière émise par l'au moins une source lumineuse (8) en direction de la glace pour former une fonction de signalisation,
- la glace (3) formant un premier angle de 60° à 100° avec l'axe optique dudit au moins un module d'éclairage (4), **caractérisé en ce que**
- l'écran (5) forme, avec l'axe optique dudit au moins module d'éclairage, un deuxième angle tel qu'une partie du cône de lumière du faisceau lumineux située sous l'axe optique et la plus éloignée de l'axe optique, dans une position d'utilisation du projecteur, est réfléchie par l'écran en direction dudit module d'éclairage, de manière à passer au-dessus de celui-ci.

2. Projecteur (1) selon la revendication 1, **caractérisé en ce qu'**il comprend au moins deux modules d'éclairage (4) et **en ce que** le deuxième angle est tel que, pour le module d'éclairage émettant le cône de lumière le plus grand, la partie du cône d'émission du faisceau lumineux de ce module située sous l'axe optique dans la position d'utilisation du projecteur est réfléchie par l'écran en direction dudit module d'éclairage, au dessus de celui-ci.

3. Projecteur (1) selon la revendication 1 ou 2, **caractérisé en ce qu'**il comprend, à l'intérieur du boîtier, un élément absorbeur (12) de lumière disposé dans une partie du boîtier située au dessus de l'axe optique lorsque le projecteur est dans la position d'utilisation, cet élément absorbeur s'étendant sur une surface suffisante pour recevoir la partie du cône de lumière du faisceau lumineux émise par ledit au moins un module d'éclairage et réfléchie par l'écran.

4. Projecteur (1) selon l'une quelconque des revendications précédentes, **caractérisé en ce qu'**au moins une partie supérieure d'un contour (32) d'une zone transparente (31) de la glace est définie par une courbe d'intersection de la glace avec le cône de lumière (6) dudit au moins un module d'éclairage, notamment avec le cône de lumière le plus grand lorsqu'au moins deux modules d'éclairage sont présents ou par une courbe située à l'extérieur de la courbe d'intersection à une distance déterminée de celle-ci.

5. Projecteur (1) selon l'une quelconque des revendications précédentes, **caractérisé en ce qu'**il comprend au moins deux modules d'éclairage (4) disposés l'un à côté de l'autre horizontalement, le projecteur étant dans la position d'utilisation.

6. Projecteur (1) selon l'une quelconque des revendications précédentes, **caractérisé en ce que** l'au moins un module d'éclairage (4) émet un cône de lumière (6) présentant une forme complexe présentant depuis le module d'éclairage, une forme convergente jusqu'à un rétrécissement (6c) suivie d'une forme divergente et **en ce que** la glace est disposée au niveau du rétrécissement du cône de lumière le long de l'axe optique.

7. Projecteur (1) selon l'une quelconque des revendications précédentes, **caractérisé en ce que** l'écran (5) présente au moins une première zone éclairée (56) recevant dudit au moins un module d'éclairage une première intensité lumineuse et au moins une deuxième zone éclairée (57) recevant dudit au moins un module d'éclairage une deuxième intensité lumineuse inférieure à la première intensité lumineuse et **en ce qu'**une densité surfacique des modules optiques dans ladite au moins une première zone éclairée est inférieure à la densité surfacique desdits modules optiques dans ladite au moins une deuxième zone éclairée.

8. Projecteur (1) selon l'une quelconque des revendications précédentes, **caractérisé en ce qu'**il comprend au moins une des caractéristiques suivantes :
- au moins une source lumineuse (8) est disposée sur au moins un bord de l'écran (52) et émet un faisceau lumineux à l'intérieur de l'écran,
- au moins un guide de lumière (9) s'étend le long d'au moins un bord de l'écran et l'au moins une source lumineuse (8) est disposée à une extrémité du guide de lumière et émet un faisceau lumineux à l'intérieur du guide de lumière.

9. Projecteur (1) selon l'une quelconque des revendications précédentes, **caractérisé en ce que** l'écran (5) reçoit au moins deux faisceaux lumineux d'au moins deux sources de lumière distinctes, notamment commandées séparément, et **en ce que** l'écran est divisé en au moins deux zones (58, 59) recevant chacune l'un des faisceaux lumineux, chaque zone étant séparée d'une autre zone par un matériau opaque (60) bloquant les faisceaux lumineux.

10. Projecteur (1) selon l'une quelconque des revendications précédentes, **caractérisé en ce que** la glace est en un matériau transparent teinté.

## Patentansprüche

1. Scheinwerfer (1) für Fahrzeuge mit einem Gehäuse (2), das durch eine transparente Scheibe (3) verschlossen ist und in dessen Innerem mindestens ein Beleuchtungsmodul (4), das ein Lichtbündel in Richtung einer optischen Achse aussendet, die einen Lichtkegel (6) definiert, und ein transparenter Schirm (5) angeordnet sind, der zwischen dem mindestens einen Beleuchtungsmodul und der Scheibe positioniert ist, wobei mindestens eine Kante (52-55) des Schirms einen Lichtstrahl empfängt, der von mindestens einer Lichtquelle (8), die sich von dem Beleuchtungsmodul (4) unterscheidet, ausgesendet und in das Innere des Schirms geleitet wird,
- wobei eine Innenseite (50) des Schirms, die dem mindestens einen Beleuchtungsmodul gegenüberliegt, mit einer Vielzahl von optischen Modulen (10) versehen ist, die das von der mindestens einen Lichtquelle (8) ausgesandte Licht in Richtung der Scheibe streuen, um eine Signalfunktion zu bilden,
- wobei die Scheibe (3) einen ersten Winkel von 60° bis 100° mit der optischen Achse des mindestens einen Beleuchtungsmoduls (4) bildet, **dadurch gekennzeichnet, dass** der Schirm (5) mit der optischen Achse des mindestens einen Beleuchtungsmoduls einen zweiten Winkel bildet, so dass ein Teil des Lichtkegels des Lichtstrahls, der unter der optischen Achse liegt und am weitesten von der optischen Achse entfernt ist, in einer Gebrauchsstellung des Scheinwerfers von dem Schirm so in Richtung des Beleuchtungsmoduls reflektiert wird, dass er über dieses hinweggeht.

2. Scheinwerfer (1) nach Anspruch 1, **dadurch gekennzeichnet, dass** er mindestens zwei Beleuchtungsmodule (4) aufweist und dass der zweite Winkel so beschaffen ist, dass bei dem Beleuchtungsmodul, das den größten Lichtkegel aussendet, der Teil des Sendekegels des Lichtstrahls dieses Moduls, der sich in der Gebrauchsstellung des Scheinwerfers unter der optischen Achse befindet, vom Schirm in Richtung des Beleuchtungsmoduls oberhalb von diesem reflektiert wird.

3. Scheinwerfer (1) nach Anspruch 1 oder 2, **dadurch gekennzeichnet, dass** er im Inneren des Gehäuses ein Licht absorbierendes Element (12) aufweist, das in einem Teil des Gehäuses angeordnet ist, der sich oberhalb der optischen Achse befindet, wenn sich der Scheinwerfer in der Gebrauchsstellung befindet, wobei sich dieses absorbierende Element über eine Fläche erstreckt, die ausreicht, um den Teil des Lichtkegels des Lichtstrahls aufzunehmen, der von dem mindestens einen Beleuchtungsmodul ausgesendet und von dem Schirm reflektiert wird.

4. Scheinwerfer (1) nach einem der vorhergehenden Ansprüche, **dadurch gekennzeichnet, dass** mindestens ein oberer Teil einer Kontur (32) eines transparenten Bereichs (31) der Scheibe durch eine Schnittkurve der Scheibe mit dem Lichtkegel (6) des mindestens einen Beleuchtungsmoduls, insbesondere mit dem größten Lichtkegel, wenn mindestens zwei Beleuchtungsmodule vorhanden sind, oder durch eine Kurve, die außerhalb der Schnittkurve in einem bestimmten Abstand von dieser liegt, definiert ist.

5. Scheinwerfer (1) nach einem der vorhergehenden Ansprüche, **dadurch gekennzeichnet, dass** er mindestens zwei Beleuchtungsmodule (4) aufweist, die horizontal nebeneinander angeordnet sind, wenn sich der Scheinwerfer in der Gebrauchsstellung befindet.

6. Scheinwerfer (1) nach einem der vorhergehenden Ansprüche, **dadurch gekennzeichnet, dass** das mindestens eine Beleuchtungsmodul (4) einen Lichtkegel (6) mit einer komplexen Form aussendet, der vom Beleuchtungsmodul ausgehend eine konvergierende Form bis zu einer Verengung (6c), gefolgt von einer divergierenden Form aufweist, und dass die Scheibe an der Verengung des Lichtkegels entlang der optischen Achse angeordnet ist.

7. Scheinwerfer (1) nach einem der vorhergehenden Ansprüche, **dadurch gekennzeichnet, dass** der Schirm (5) mindestens einen ersten beleuchteten Bereich (56) aufweist, der von dem mindestens einen Beleuchtungsmodul eine erste Lichtintensität empfängt, und mindestens einen zweiten beleuchteten Bereich (57), der von dem mindestens einen Beleuchtungsmodul eine zweite Lichtintensität empfängt, die geringer als die erste Lichtintensität ist, und dass eine Flächendichte der optischen Module in dem mindestens einen ersten beleuchteten Bereich geringer als die Flächendichte der optischen Module in dem mindestens einen zweiten beleuchteten Bereich ist.

8. Scheinwerfer (1) nach einem der vorhergehenden Ansprüche, **dadurch gekennzeichnet, dass** er mindestens eines der folgenden Merkmale aufweist:
- Mindestens eine Lichtquelle (8) ist an mindestens einer Kante des Schirms (52) angeordnet und sendet einen Lichtstrahl in das Innere des Schirms,
- mindestens ein Lichtleiter (9) erstreckt sich entlang mindestens einer Kante des Schirms und die mindestens eine Lichtquelle (8) ist an einem Ende des Lichtleiters angeordnet und sendet einen Lichtstrahl in das Innere des Lichtleiters.

9. Scheinwerfer (1) nach einem der vorhergehenden Ansprüche, **dadurch gekennzeichnet, dass** der Schirm (5) mindestens zwei Lichtstrahlen von mindestens zwei verschiedenen, insbesondere getrennt gesteuerten Lichtquellen empfängt und dass der Schirm in mindestens zwei Bereiche (58, 59) unterteilt ist, die jeweils einen der Lichtstrahlen empfangen, wobei jeder Bereich von einem anderen Bereich durch ein lichtundurchlässiges Material (60) getrennt ist, das die Lichtstrahlen blockiert.

10. Scheinwerfer (1) nach einem der vorhergehenden Ansprüche, **dadurch gekennzeichnet, dass** die Scheibe aus einem transparenten, getönten Material besteht.

## Claims

1. Headlamp (1) for a vehicle comprising a housing (2) closed by a transparent outer lens (3), inside which housing there are placed at least one lighting module (4) emitting a beam of light in the direction of an optical axis defining a cone of light (6) and a transparent screen (5) positioned between said at least one lighting module and the outer lens, at least one edge (52-55) of the screen receiving a beam of light emitted by at least one light source (8), distinct from the lighting module (4) and guided inside the screen,
- an internal face (50) of the screen, which face is situated facing said at least one lighting module, being equipped with a plurality of optical modules (10) that scatter the light emitted by the at least one light source (8) towards the outer lens, in order to form a signalling function,
- the outer lens (3) making a first angle of 60° to 100° with the optical axis of said at least one lighting module (4), **characterized in that** the screen (5) makes, with the optical axis of said at least one lighting module, a second angle such that part of the cone of light from the beam of light, which part is situated beneath the optical axis and furthest from the optical axis when they headlight is in a position of use, is reflected by the screen towards said lighting module, so as to pass above the same.

2. Headlamp (1) according to Claim 1, **characterized in that** it comprises at least two lighting modules (4) and **in that** the second angle is such that, for the lighting module that emits the largest cone of light, that part of the emission cone of the beam of light from this module, which part is situated beneath the optical axis when the headlamp is in the position of use, is reflected by the screen towards said lighting module, above the same.

3. Headlamp (1) according to Claim 1 or 2, **characterized in that** it comprises, inside the housing, a light-absorbing element (12) placed in a part of the housing that is situated above the optical axis when the headlamp is in the position of use, this absorbing element extending over a sufficient surface area to receive that part of the cone of light from the beam of light which is emitted by said at least one lighting module and reflected by the screen.

4. Headlamp (1) according to any one of the preceding claims, **characterized in that** at least an upper part of a contour (32) of a transparent zone (31) of the outer lens is defined by a curve of intersection of the outer lens with the cone of light (6) from said at least one lighting module, notably with the largest cone of light when at least two lighting modules are present, or by a curve situated outside of the curve of intersection at a determined distance therefrom.

5. Headlamp (1) according to any one of the preceding claims, **characterized in that** it comprises at least two lighting modules (4) placed one beside the other horizontally, the headlamp being in the position of use.

6. Headlamp (1) according to any one of the preceding claims, **characterized in that** the at least one lighting module (4) emits a cone of light (6) that has a complex shape having, starting from the lighting module, a form that converges as far as a narrowing (6c) followed by a divergent shape, and **in that** the outer lens is placed at the narrowing of the cone of light along the optical axis.

7. Headlamp (1) according to any one of the preceding claims, **characterized in that** the screen (5) has at least one first illuminated zone (56) that receives, from said at least one lighting module, a first intensity of light, and at least one second illuminated zone (57) that receives, from said at least one lighting module, a second intensity of light lower than the first intensity of light, and **in that** a surface density of optical modules in said at least one first illuminated zone is lower than the surface density of said optical modules in said at least one second illuminated zone.

8. Headlamp (1) according to any one of the preceding claims, **characterized in that** it comprises at least one of the following features:
- at least one light source (8) is placed on at least one edge of the screen (52) and emits a beam of light into the screen,
- at least one light guide (9) extends along at least one edge of the screen and the at least one light source (8) is placed at one end of the light guide and emits a beam of light into the light guide.

9. Headlamp (1) according to any one of the preceding claims, **characterized in that** the screen (5) receives at least two beams of light from at least two distinct light sources, notably controlled separately, and **in that** the screen is divided into at least two zones (58, 59) each receiving one of the beams of light, each zone being separated from another zone by an opaque material (60) that blocks the beams of light.

10. Headlamp (1) according to any one of the preceding claims, **characterized in that** the outer lens is made from a tinted transparent material.
